# FASCICULE DE BREVET EUROPEEN

(11) **EP 2 190 128 B1**
(45) Date de publication et mention de la délivrance du brevet: **15.08.2018**
(21) Numéro de dépôt: 10155286.7
(22) Date de dépôt: 20.12.2004
(51) Int. Cl.: H04B 3/54

(54) **Dispositif de connexion filaire à une platine électronique distante**
Einrichtung für eine Drahtverbindung zu einer fernen elektrischen Platine.
Device for a wire connection to a remote electric board

(30) Priorité: 23.12.2003 FR 0315242
(43) Date de publication de la demande: 26.05.2010
(62) Demande divisionnaire de: 04804952.2
(73) Titulaire: Valeo Sécurité Habitacle, 94046 Créteil Cedex (FR)
(72) Inventeur: Leconte, Eric, 94042, CRETEIL (FR)
(74) Mandataire: Pothmann, Karsten

(56) Documents cités:
- EP-A2- 0 777 311
- DE-A1- 19 510 279
- DE-A1- 19 906 095
- US-A- 5 789 959
- STIEGLER F ET AL: "KONZEPT EINER NEUARTIGEN BORDNETZSTRUKTUR FUER DEN EINSATZ VON POWERLINE-KOMMUNIKATION IM KFZ A NOVEL SUPPLY NETWORK ARCHITECTURE FOR POWERLINE COMMUNICATIONS IN AUTOMOBILES", FREQUENZ, SCHIELE UND SCHON GMBH. BERLIN, DE, vol. 56, no. 5/6, mai 2002 (2002-05), pages 126-132, XP001115783, ISSN: 0016-1136

## Description

La présente invention concerne un dispositif de connexion filaire à une platine électronique distante.

Elle trouve application particulièrement dans la solution du problème de la réduction du nombre de fils de connexion dans un faisceau de connexion d'une platine électronique à un contrôleur distant central. Le document EP-A-777311 divulgue la transmission de puissance et données sur la même ligne.

Le document DE 199 06 95 divulgue un système pour la connexion des plusieurs senseurs dans un véhicule. Dans l'état de la technique, un calculateur ou contrôleur central est relié par un ou plusieurs faisceaux de fils électriques à une ou plusieurs platines électroniques qui comportent des détecteurs ou capteurs de façon à exécuter des fonctions particulières sous la commande du contrôleur distant.

Ainsi, quand chaque capteur demande plusieurs fils et qu'une platine électronique comporte plusieurs capteurs, le nombre de fils de faisceau devient important.

Un tel faisceau à plusieurs fils présente à la fois un coût matière et un coût main-d'oeuvre important notamment lors de sa fabrication puis lors de sa pose et enfin lors de la maintenance du véhicule.

Par ailleurs, dans l'état de la technique, on s'est aperçu, notamment pour les fils dédiés à la transmission de signaux, l'oxydation ou plus généralement la pollution des contacts électriques auxquels ces fils étaient connectés, présentaient des inconvénients dans la transmission des données, ces inconvénients pouvant aller jusqu'à la rupture de la connexion.

Pour remédier à ces inconvénients, il a déjà été proposé de transférer des courants plus importants à des périodes convenablement choisies de façon à nettoyer de manière électrique les contacts qui sont susceptibles plus que d'autres d'être oxydés ou pollués.

C'est un autre avantage de l'invention de permettre, malgré la réduction du nombre de fils, de continuer à bénéficier de la ressource de nettoyage électrique des quelques contacts conservés dans la liaison ou connexion filaire d'une platine distante à un contrôleur central.

En effet, la présente invention concerne un dispositif de connexion filaire d'un contrôleur distant à une platine électronique distante. Selon l'invention, le contrôleur distant est connecté par un faisceau à au moins un fil à la platine électronique. Il comporte un moyen d'alimentation en tension continu et la platine électronique comporte un moyen pour séparer l'alimentation électrique du signal transmis vers le contrôleur distant, de sorte qu'au moins un fil d'alimentation et/ou de signal puisse être éliminé dans le faisceau.

Selon d'autres caractéristiques :
- le contrôleur distant comporte de plus un circuit séparateur de signal de transmission provenant de ladite platine ;
- le circuit séparateur de signal de transmission comporte, pour chaque signal de transmission un comparateur de l'image du courant délivré sur au moins un fil du faisceau avec une tension de référence ;
- le circuit séparateur de signal de transmission comporte aussi un filtre pour séparer l'alimentation d'un accès réservé à un pilote radiofréquence ;
- le moyen d'alimentation en tension continu comporte un circuit mesurant par exemple un miroir de courant dont une borne d'alimentation est connectée à une source d'alimentation électrique et une première borne de sortie est connectée à un fil d'alimentation et/ou de transmission de signal, tandis que la borne de sortie miroir est connectée au circuit séparateur de signal de transmission ;
- le moyen pour séparer l'alimentation électrique du signal transmis comporte une résistance de tirage disposée sur le chemin principal de courant d'un transistor de sortie d'un circuit logique d'exploitation de capteurs ;
- le moyen pour séparer l'alimentation électrique du signal transmis comporte une diode de séparation disposée sur le chemin principal de courant d'un transistor de sortie d'un circuit logique d'exploitation de capteurs ;
- le moyen d'alimentation électrique comporte un condensateur disposée en relation avec la platine électronique pour alimenter ses composants ;
- le moyen pour séparer l'alimentation électrique du signal transmis et/ou le moyen d'alimentation électrique sont disposés directement sur le faisceau, sur son substrat isolant et/ou sur l'un des connecteurs d'extrémité ;
- le dispositif comporte un moyen pour placer le moyen d'alimentation électrique en mode nettoyage des contacts.

D'autres caractéristiques et avantages de la présente invention seront mieux compris à l'aide de la description détaillé qui va suivre et des dessins annexés dans lesquels :
- la figure 1 est un schéma de l'état de la technique ;
- les figures 2 à 4 sont des modes de réalisation de l'invention.

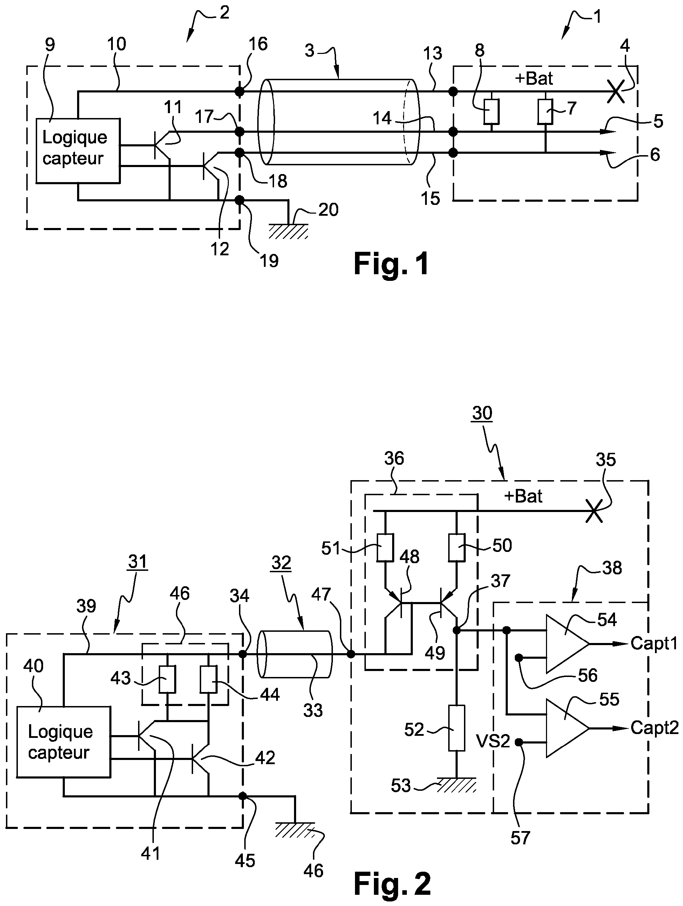

A la figure 1, on a représenté un schéma d'une réalisation de l'état de la technique.

Le contrôleur distant 1 est connecté par un faisceau 3 de câbles à au moins une platine électronique 2.

Le faisceau 3 comporte dans le mode de réalisation décrit trois fils respectivement un fil 13 pour recevoir l'alimentation électrique en tension continue, un fil 14 pour recevoir le signal transmis par un premier capteur installé sur la platine électronique 2, et un troisième fil 15 pour recevoir un signal de transmission transmis par un second capteur installé sous la platine électronique 2.

Du côté du contrôleur 1, les fils de signaux 14 et 15 sont reliés à la ligne d'alimentation électrique par l'intermédiaire de résistances respectivement 8 pour le fil 14 et 7 pour le fil 15 de sorte que, en appliquant une tension d'alimentation correcte, il est possible de dériver du courant d'alimentation vers les contacts 17 et 18 notamment mais aussi sur le contact 19, qui permettent de connecter la platine électronique distante 2 au faisceau 3.

La platine électronique 2 comporte une pluralité de détecteurs, de capteurs ou d'effecteurs qui, en fonction de l'environnement extérieur, ou d'action d'un utilisateur comme dans le cas d'un bouton interrupteur, transmettent à l'aide d'une logique d'analyse des capteurs 9 des signaux vers des transistors 11 et 12 dont chacun permet de transmettre un signal de transmission par un fil réservé à chaque capteur.

Ces signaux sont alors disponibles sur le contrôleur à des entrées 5 et 6 à une unité centrale de traitement des entrées et des sorties (non représentées).

La platine comporte aussi une connexion de mise à la masse locale en mettant par exemple la platine au châssis du véhicule.

Dans cette disposition avec deux capteurs, on constate l'exigence d'au moins trois fils dans le faisceau 3.

La présente invention permet de s'affranchir des fils supplémentaires nécessités au-delà du fil d'alimentation en tension continue.

A la figure 2, on a représenté un premier mode de réalisation de l'invention.

A la figure 2, le contrôleur distant 30 est connecté par un faisceau 32 à au moins une platine électronique 31.

Le faisceau 32 comporte un fil conducteur unique 33 qui connecte la borne 47 de sortie du contrôleur 30 à une borne d'entrée 34 de la platine électronique 31.

Selon l'invention, le contrôleur distant 30 comporte une source ou une connexion à une source électrique de tension continue 35 qui est connectée à un circuit de séparation du signal ou des signaux transmis par la ou les platines comme la platine électronique 31.

Ce circuit de séparation 36 comporte une connexion à la borne d'accès 47, d'une part, et une borne 37 de connexion à un circuit de détection de signaux de transmission 38, lesdits signaux de transmission 38 provenant d'une pluralité de capteurs et/ou de platines électroniques.

De même, chaque platine connectée sur la borne d'accès 47 au contrôleur distant 30 comporte sa propre logique d'analyse des signaux, des capteurs, des détecteurs et autres effecteurs qui ne sont pas représentés.

Le circuit logique des capteurs 40 comporte une connexion 39 à la tension d'alimentation délivrée par la source d'alimentation 35 du contrôleur distant, cette connexion 39 étant tirée d'une sortie adaptée d'un circuit 46 permettant de séparer l'alimentation en tension continue de la platine des signaux de transmission produits par les capteurs.

Dans un mode préféré de réalisation représenté à la figure 2, le circuit 46 comporte une connexion directe entre la borne d'accès 39 et la borne d'accès 34 de la platine, sur laquelle sont disposées une pluralité de résistances 49 et 44 qui sont disposés dans les chemins principaux de courant collecteurs émetteurs d'une pluralité de transistors 41, 42.

Les émetteurs des transistors sont connectés à la masse locale 45 de la platine 31, et la base de chaque transistor, 41, 42 est connectée à une sortie convenable dévolue à la transmission du signal de transmission issue d'un capteur ou d'un groupe de capteurs déterminés par avance.

Les collecteurs des transistors 41, 42 sont connectés aux résistances précitées du circuit 46.

Le contrôleur distant comporte aussi un circuit 38 de décodage des signaux transmis sur le fil unique 33 reliant la platine électronique 31 au contrôleur distant 30.

Dans un mode particulier de réalisation, le circuit de séparation 38 comporte une pluralité de comparateurs 54, 55 comportant des entrées connectées à des générateurs de tension de seuil caractéristiques de la transmission relative aux capteurs concernés et dont une autre entrée est connectée à la borne commune 37 du circuit 36 de séparation de l'alimentation électrique et des signaux de transmission.

Les sorties des comparateurs 54, 55 sont alors exploités comme signaux caractéristiques de mesure des capteurs, des détecteurs et/ou effecteurs de la platine 31 connectés par le fil unique 33 au contrôleur distant 30.

Lors d'un mode de fonctionnement en nettoyage des contacts, essentiellement du contact 34, le circuit d'alimentation 35 sur le contrôleur distant peut transmettre un courant élevé de nettoyage du contact, le circuit de séparation 46 protégeant les voies de transmission pendant la période de circulation du courant de nettoyage du contact.

On pratique alors identiquement à la technique de nettoyage par courant circulant dans l'état de la technique.

Par contre, en fonctionnement, le fil unique 33 porte à la fois la tension de polarisation de la platine électronique 31 et les signaux de transmission caractéristiques des sorties de la logique des capteurs 40 en fonction des niveaux admis par les différentes résistances 49, 44.

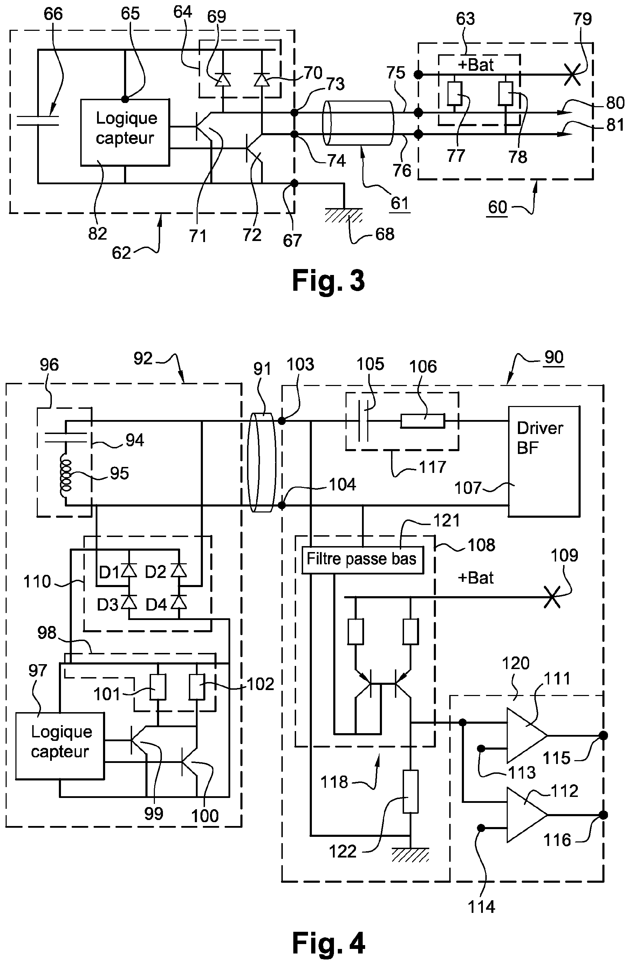

A la figure 3, on a représenté un autre mode de réalisation de l'invention.

A la figure 3, le contrôleur distant 60 est connecté par un faisceau de fils 61 à un circuit distant comme une platine électronique 62.

La platine électronique 62 comporte un circuit de séparation 64 de l'alimentation et des signaux transmis, un condensateur de charge 66 qui est connecté entre la masse locale 67 de la platine électronique 62 et la borne d'alimentation ou de polarisation 65 du circuit de logique des capteurs 82.

Le circuit logique des capteurs 82 comporte une pluralité de sorties qui sont connectés respectivement aux bases des transistors 71, 72.

Les émetteurs des transistors 71, 72 sont reliés à la masse locale par la masse locale 67 tandis que leurs collecteurs sont connectés, d'une part, chacun à une borne de sortie 73, 74 et au circuit de séparation précité 64, d'autre part.

Le faisceau 61 est donc connecté par des fils 75 et 76 aux bornes 73, 74 produisant les signaux de transmission représentatifs des mesures des capteurs, détecteurs ou effecteurs transformés par le circuit de logique des capteurs 82.

On remarque que dans cette disposition, le faisceau 61 ne comporte pas de fil d'alimentation en tension continue, l'invention permettant dans cette disposition de se passer d'une alimentation permanente.

Dans cette répartition, le contrôleur distant 60 comporte une source ou une connexion à une source d'alimentation électrique continue 79 qui est transmise à un circuit de séparation de l'alimentation continue et des signaux transmis 63, et qui comportent une pluralité de résistances 77, 78 qui sont connectés aux fils 75 et 76 du faisceau, d'une part et, d'autre part, aux sorties 80, 81 qui transmettent les signaux générés par les transistors 71, 72 à destination du contrôleur distant 60.

Le condensateur 66 se charge à travers les résistances 77 et 78 ainsi que les diodes 69 et 70.

Lors d'une détection sur au moins l'in des capteurs associés à la platine électronique, le circuit logique des capteurs 82 actionne l'un des transistors 71 ou 72 ou les deux,.

Cette information est transmise au module 60 par l'intermédiaire des fils 75 et/ou 76.

Lorsque le programme de gestion du contrôleur distant 61 décide un nettoyage par courant circulant, le contrôleur distant 62 commande les transistors 71 et/ou 72.

Le courant circulant alors dans le faisceau 62 permet de nettoyer les contacts 73, 74 et 67.

Puis, dans un second temps, la source 79 est coupée sur le contrôleur distant 60 et pendant ce temps de fonctionnement des capteurs, détecteurs et autres effecteurs associés à la platine électronique 62, les signaux sont transmis sur les fils respectivement 75, 76 du faisceau 61 et peuvent donc être reçus sur le contrôleur distant 60.

Pour éviter de produire un court-circuit sur le condensateur 66 lors de la transmission d'un ou de plusieurs signaux, le circuit de séparation 64 est constitué par des diodes 69, 70 respectivement connectées aux collecteurs des transistors 71, 72.

Le condensateur 66 permet alors d'alimenter la logique du capteur 82.

Dans un mode particulier de réalisation, les diodes 69, 70 sont intégrées au faisceau 61 par exemple sur le connecteur du faisceau 61 disposé du côté de la platine. On trouvera un exemple d'une telle technique dans la demande de brevet EP-A-0.719.664.

Dans cette hypothèse, on peut conserver strictement une platine électronique du même type que dans l'état de la technique sans avoir à la modifier, le faisceau comportant alors les composants, résistances ou diodes et schéma de connexion nécessaires pour assurer le fonctionnement selon l'invention en reproduisant le schéma des figures 1 à 4 par exemple.

De même, en prévoyant une connexion supplémentaire de masse dans le faisceau, il est possible d'intégrer le condensateur 66 au faisceau électrique 61 directement sur un substrat isolant associé aux fils de câblage ou comme précédemment décrit sur un connecteur disposé en bout de faisceau.

Les signaux transmis alors sur le faisceau 61 sont alors directement transmis sur les fils 75 et 76 (cas d'une platine à deux voies de transmission) vers des sorties 80 et 81 pour traitement par le contrôleur distant 60.

A la figure 4, on a représenté un troisième mode de réalisation du dispositif de l'invention. Le contrôleur distant 80 est connecté par un faisceau 81 à au moins une platine électronique distante 82. La platine électronique 82 comporte, comme les platines des exemples précédents des capteurs, des détecteurs et/ou des effecteurs (non représentés pour simplifier le dessin), mais aussi une antenne 84 représentée sous la forme d'une inductance 85 et de sa capacité d'accord 86. Une telle antenne 84 peut être utilisée par exemple comme une antenne pour un système d'accès mains libres à badge radiofréquence. La platine électronique peut donc se trouver logée notamment dans une portière du véhicule. Les capteurs associés à la platine comportent classiquement un capteur capacitif pour détecter l'approche de la main d'un utilisateur et un interrupteur à bouton pour commander le verrouillage manuel de l'accès au véhicule.

Le circuit de logique capteurs 97 est disposé comme dans l'exemple de la figure 2 avec un moyen 98 pour séparer l'alimentation électrique transmise à une borne d'entrée de polarisation (non référencée) du circuit 97 et aux transistors de sortie de transmission 99, 100, .... Polarisation et signaux de transmission sont échangés avec le contrôleur distant 90 par l'intermédiaire d'un pont de diodes 118 protégeant la platine électronique 92 des inversions de polarité qui surviennent notamment au montage de la platine selon la polarisation appliquée à l'antenne 94.

Les deux fils 103, 104 du faisceau 91 sont connectés directement entre les bornes correspondantes du contrôleur distant 90 et de la platine électronique 92.

Dans le contrôleur distant 90, on trouve un moyen d'alimentation en tension continue 108 connecté à une source d'alimentation continue 109 et qui comporte un miroir de courant ou tout autre moyen de mesure de courant.

La borne de polarisation du miroir de courant 118 est connectée à la source 109 et une première borne de sortie du miroir de courant est connectée à un port d'entrée d'un filtre passe-bas 121 dont un port de sortie est connecté à la borne du contrôleur distant connecté au fil 103.

L'autre port d'entrée du filtre passe-bas 121 est connecté à la masse à laquelle est référencé le miroir de courant à travers une résistance 12 et le port équivalent de sortie du filtre 121 est connecté comme une masse générale à la borne du contrôleur distant connecté au fil 104.

Le circuit séparateur 120 de signal de transmission est constitué avec des comparateurs 111, 112, .... à des seuils de référence 113, 114, ... comme dans l'exemple de la figure 2. Mais le circuit d'alimentation 108 coopère de plus avec un filtre 117 pour séparer l'alimentation électrique en tension continue 109 d'un accès réservé à un pilote radiofréquence 107 qui utilise l'antenne 94 sur la platine électronique 92. Préférentiellement, le circuit 117 comporte un circuit série composé un condensateur 105 et d'une résistance 106 pour couper le régime continu dont une première entrée de chacun est connectée à la borne de sortie du circuit d'alimentation 108, elle-même connectée à la masse à travers la résistance 122.

D'autres adaptations et applications sont à la mesure de l'homme de métier à l'aide des exemples de réalisation donnés dans la présente description et les revendications annexées.

## Revendications

1. Dispositif de connexion filaire d'un contrôleur distant (30 ; 60 ; 90) à au moins une platine électronique (31 ; 62 ; 92) pour détecter l'approche de la main d'un utilisateur lors de l'accès à un véhicule, le contrôleur distant (30 ; 60 ; 90) étant connecté par un faisceau (32 ; 61 ; 91) à au moins un fil à la platine électronique (31 ; 62 ; 92) et comportant un moyen d'alimentation (36; 63; 108), ledit dispositif comportant un moyen (46; 64; 98) pour séparer l'alimentation électrique du signal transmis vers le contrôleur distant, de sorte qu'au moins un fil d'alimentation et/ou de signal puisse être éliminé dans le faisceau, **caractérisé en ce que** le contrôleur distant comporte de plus un circuit séparateur (38 ; 120) de signal de transmission provenant de ladite platine (31 ; 92), et **en ce que** le circuit séparateur (38 ; 120) de signal de transmission comporte, pour chaque signal de transmission un comparateur (54, 55, ... ; 111, 112, ...) de l'image du courant délivré sur au moins un fil du faisceau (32 ; 91) avec une tension de référence (56, 57, ... ; 113, 114, ...).

2. Dispositif selon la revendication 1, **caractérisé en ce que** le moyen d'alimentation (36 ; 63 ; 108) est un moyen d'alimentation en tension continu.

3. Dispositif selon la revendication 1, **caractérisé en ce que** le circuit séparateur (120) de signal de transmission comporte aussi un filtre (117) pour séparer l'alimentation d'un accès réservé à un pilote radiofréquence (107).

4. Dispositif selon la revendication 2, **caractérisé en ce que** le moyen d'alimentation en tension continu (36, 108) comporte
un circuit de mesure du courant comme un miroir de courant (48 - 51 ; 118) dont une borne d'alimentation est connectée à une source d'alimentation électrique (35; 109) et une première borne de sortie est connectée à un fil d'alimentation et/ou de transmission de signal, tandis que la borne de sortie miroir est connectée au circuit séparateur (38 ; 120) de signal de transmission.

5. Dispositif selon la revendication 4, **caractérisé en ce que** le moyen (46 ; 98) pour séparer l'alimentation électrique du signal transmis comporte une résistance de tirage (44, 49, ... ; 101, 102, ...) disposée sur le chemin principal de courant d'un transistor de sortie d'un circuit logique d'exploitation de capteurs (40 ; 97).

6. Dispositif selon la revendication 4, **caractérisé en ce que** le moyen (64) pour séparer l'alimentation électrique du signal transmis comporte une diode de séparation (69, 70, ...) disposée sur le chemin principal de courant d'un transistor de sortie d'un circuit logique d'exploitation de capteurs (40 ; 97).

7. Dispositif selon la revendication 2 ou 6, **caractérisé en ce que** le moyen d'alimentation électrique (63) comporte un condensateur (66) disposé en relation avec la platine électronique (62) pour alimenter ses composants.

8. Dispositif selon l'une des revendications 5 à 7, **caractérisé en ce que** le moyen (46 ; 98) pour séparer l'alimentation électrique du signal transmis et/ou le moyen d'alimentation électrique (63) sont disposés directement sur le faisceau, sur son substrat isolant et/ou sur l'un des connecteurs d'extrémité.

9. Dispositif selon l'une quelconque des revendications précédentes, **caractérisé en ce qu'**il comporte un moyen pour placer le moyen d'alimentation électrique (36 ; 63 ; 108) en mode nettoyage des contacts (34 ; 73, 74).

## Patentansprüche

1. Vorrichtung zur Drahtverbindung einer fernen Steuereinheit (30; 60; 90) mit mindestens einer elektronischen Platine (31; 62; 92) zum Detektieren der Annäherung der Hand eines Benutzers beim Zugang zu einem Fahrzeug, wobei die ferne Steuereinheit (30; 60; 90) über ein mindestens einen Draht aufweisendes Bündel (32; 61; 91) mit der elektronischen Platine (31; 62; 92) verbunden ist und eine Versorgungseinrichtung (36; 63; 108) aufweist, wobei die Vorrichtung eine Einrichtung (46; 64; 98) zur Trennung der Stromversorgung von dem zur fernen Steuereinheit übertragenen Signal aufweist, so dass mindestens ein Versorgungs- und/oder Signaldraht aus dem Bündel entfernt werden kann, **dadurch gekennzeichnet, dass** die ferne Steuereinheit außerdem eine Trennschaltung (38; 120) eines von der Platine (31; 92) kommenden Übertragungssignals aufweist und dass die Übertragungssignal-Trennschaltung (38; 120) für jedes Übertragungssignal einen Komparator (54, 55, ...; 111, 112, ...) zum Vergleich des Abbilds des auf mindestens einem Draht des Bündels (32, 91) gelieferten Stroms mit einer Bezugsspannung (56, 57, ...; 113, 114, ...) aufweist.

2. Vorrichtung nach Anspruch 1, **dadurch gekennzeichnet, dass** die Versorgungseinrichtung (36; 63; 108) eine Gleichspannungsversorgungseinrichtung ist.

3. Vorrichtung nach Anspruch 1, **dadurch gekennzeichnet, dass** die Übertragungssignal-Trennschaltung (120) auch ein Filter (117) aufweist, um die Versorgung von einem für einen Radiofrequenz-Treiber (107) reservierten Zugang zu trennen.

4. Vorrichtung nach Anspruch 2, **dadurch gekennzeichnet, dass** die Gleichspannungsversorgungseinrichtung (36, 108) eine Strommessschaltung wie einen Stromspiegel (48 - 51; 118) aufweist, von dem eine Versorgungsklemme mit einer Stromversorgungsquelle (35; 109) verbunden ist und eine erste Ausgangsklemme mit einem Versorgungs- und/oder Signalübertragungsdraht verbunden ist, während die Spiegelausgangsklemme mit der Übertragungssignal-Trennschaltung (38; 120) verbunden ist.

5. Vorrichtung nach Anspruch 4, **dadurch gekennzeichnet, dass** die Einrichtung (46; 98) zur Trennung der Stromversorgung vom übertragenen Signal einen Zugwiderstand (44, 49, ...; 101, 102, ...) aufweist, der auf dem Hauptstromweg eines Ausgangstransistors einer Betriebslogikschaltung von Sensoren (40; 97) angeordnet ist.

6. Vorrichtung nach Anspruch 4, **dadurch gekennzeichnet, dass** die Einrichtung (64) zur Trennung der Stromversorgung vom übertragenen Signal eine Trenndiode (69, 70, ...) aufweist, die auf dem Hauptstromweg eines Ausgangstransistors einer Betriebslogikschaltung von Sensoren (40; 97) angeordnet ist.

7. Vorrichtung nach Anspruch 2 oder 6, **dadurch gekennzeichnet, dass** die Stromversorgungseinrichtung (63) einen Kondensator (66) aufweist, der in Verbindung mit der elektronischen Platine (62) angeordnet ist, um ihre Komponenten zu versorgen.

8. Vorrichtung nach einem der Ansprüche 5 bis 7, **dadurch gekennzeichnet, dass** die Einrichtung (46; 98) zur Trennung der Stromversorgung vom übertragenen Signal und/oder die Stromversorgungseinrichtung (63) direkt auf dem Bündel, auf seinem Isoliersubstrat und/oder auf einem der Endverbinder angeordnet sind.

9. Vorrichtung nach einem der vorhergehenden Ansprüche, **dadurch gekennzeichnet, dass** sie eine Einrichtung aufweist, um die Stromversorgungseinrichtung (36; 63; 108) in den Modus der Kontaktreinigung (34 ; 73, 74) zu versetzen.

## Claims

1. Wire connection device for connecting a remote controller (30; 60; 90) to at least one electronic panel (31; 62; 92) in order to detect the approach of a user's hand when accessing a vehicle, the remote controller (30; 60; 90) being connected by a bundle (32; 61; 91) with at least one wire to the electronic panel (31; 62; 92) and comprising a power supply means (36; 63; 108), said device comprising a means (46; 64; 98) for separating the electrical power supply from the signal transmitted to the remote controller so that at least one power supply wire and/or signal wire can be eliminated from the bundle, **characterized in that** the remote controller also comprises a circuit (38; 120) for separating the transmission signal originating from said panel (31; 92), and **in that** the transmission signal separating circuit (38; 120) comprises, for each transmission signal, a comparator (54, 55, ...; 111, 112, ...) for comparing the image of the current delivered over at least one wire of the bundle (32; 91) with a reference voltage (56, 57, ...; 113, 114, ...).

2. Device according to Claim 1, **characterized in that** the power supply means (36; 63; 108) is a DC voltage power supply means.

3. Device according to Claim 1, **characterized in that** the transmission signal separating circuit (120) also comprises a filter (117) for separating the power supply from an access reserved for a radiofrequency driver (107).

4. Device according to Claim 2, **characterized in that** the DC voltage power supply means (36, 108) comprises a current measurement circuit like a current mirror (48-51; 118), of which a power supply terminal is connected to an electrical power supply source (35; 109) and a first output terminal is connected to a power supply and/or signal transmission wire, whereas the mirror output terminal is connected to the transmission signal separating circuit (38; 120).

5. Device according to Claim 4, **characterized in that** the means (46; 98) for separating the electrical power supply from the transmitted signal comprises a pull resistor (44, 49, ...; 101, 102, ...) positioned on the main current path of an output transistor of a sensor operation logic circuit (40; 97).

6. Device according to Claim 4, **characterized in that** the means (64) for separating the electrical power supply from the transmitted signal comprises a separation diode (69, 70, ...) positioned on the main current path of an output transistor of a sensor operation logic circuit (40; 97).

7. Device according to Claim 2 or 6, **characterized in that** the electrical power supply means (63) comprises a capacitor (66) positioned in relation to the electronic panel (62) to power its components.

8. Device according to one of Claims 5 to 7, **characterized in that** the means (46; 98) for separating the electrical power supply from the transmitted signal and/or the electrical power supply means (63) are positioned directly on the bundle, on its insulating substrate and/or on one of the end connectors.

9. Device according to any one of the preceding claims, **characterized in that** it comprises a means for placing the electrical power supply means (36; 63; 108) in a mode for cleaning the contacts (34; 73, 74).
